# EUROPEAN PATENT APPLICATION

(11) **EP 4 576 524 A1**
(43) Date of publication of application: **25.06.2025**
(21) Application number: 23219510.7
(22) Date of filing: 21.12.2023
(51) Int. Cl.: H02K 15/00, H02K 15/06, H02K 15/12

(54) **TUBE FOR FASTENING A FORM COIL ON AN ELECTRIC MACHINE, SUCH AS A GENERATOR, A COIL ASSEMBLY FOR A GENERATOR, GENERATOR, WIND TURBINE, METHOD OF REPAIRING A GENERATOR WITH FORM COILS, AND USE OF A TUBE AND OF A COIL ASSEMBLY IN A GENERATOR**

(71) Applicant: Wobben Properties GmbH, 26607 Aurich (DE)
(72) Inventor: Seifert, Konrad, 06466 Gatersleben (DE); Feith, Manuel, 26427 Esens (DE)
(74) Representative: Eisenführ Speiser

(57) **Abstract**

A coil assembly for a generator, in particular a generator for a wind turbine (100), comprising the coil assembly: several form coils (10), each formed by an electrical conductor (26) extending between a first terminal and a second terminal, a respective first terminal of a form coil being connected to a second terminal of a further form coil (10), wherein the electrical conductor forms two parallel legs (12a, 12b) extending between first and second coil heads by which the two legs (12a, 12b) are interconnected; and a laminated core (20), in particular a laminated core for a rotor or a laminated core for a stator, which has a plurality of grooves (38) extending in the axial direction (A) parallel to the axis of rotation (D) of the generator and parallel to one another between a first groove end (38a) and a second groove end (38b), which grooves are arranged at a distance from one another in the circumferential direction (U) with respect to the axis of rotation (D); wherein a first leg (12a) of one form coil (10) and a second leg (12b) of another form coil (10) are respectively inserted in the grooves (38); wherein a tube (30) is arranged in at least one of the grooves (38) between the first leg (12a) and the second leg (12b), wherein the tube (30) is filled with a filling medium (31).

## Description

The invention relates to a tube for fastening a form coil on an electric machine, such as a generator. Further, the invention relates to a coil assembly for a generator, a generator, and a wind turbine. Additionally, the invention relates to a method for repairing a generator with form coils and use of a tube and a coil assembly in a generator.

The invention can be applied to generators. Although the invention will be described with respect to generators in a wind turbine, the invention is not restricted to this particular implementation, but may also be used in other machines that possess a generator.

Generators for use in wind turbines are located such that repairs are difficult. The current process involves five general steps, inspection and diagnosis, dismantling and transportation, cleaning and disassembly, repair and reassembly and installation and commissioning. While inspection and diagnosis can generally be carried out onsite, the repair process is usually carried out offsite. Dismantling and transportation involves removing the generator from the wind turbine using cranes, hoists or other lifting devices. The generator is then transported to a workshop or a service center where the repair process can begin. Cleaning and disassembly as well as repair and reassembly is then carried out in the workshop or service center after which the repaired generator needs to be transported back to the wind turbine. Installation and commissioning again involves using cranes, hoists or other lifting devices to bring lift the repaired generator back on top of the wind turbine.

In particular, during when manufacturing a coil assembly of a generator, a wedge is used to secure the form coils on the radial side (air gap side).

In particular, access to the coil assembly of the generator can be limited, when the generator is mounted on the tower in an operation position. Consequently, it is at least difficult to secure form coils on the radial side (air gap side) with wedges as it is done during a manufacturing process of the coil assembly of the generator.

Thus, known state of the art has several disadvantages. On the one side due to the difficulty and time required to transport the generator offsite for repairs, which leads to high costs brought about from the long period of time where the wind turbine is non-operational as well as high transport costs to the offsite location for repairs. On the other side due to the limited access options to the coil assembly, when the generator is in the operation position, on-site repair is not possible or at least only possible with great effort.

Consequently, an object of the invention is to provide a tube for fastening a form coil on an electric machine, such as a generator, a coil assembly for a generator, a generator, a wind turbine, a method for repairing a generator, and a use of a tube as well as a use of a coil assembly in a generator to overcome the disadvantages of the prior art. In particular, an object of the invention is to provide a tube for fastening a form coil on an electric machine, such as a generator, a coil assembly for a generator, a generator, a wind turbine, a method for repairing a generator, and a use of a tube as well as a use of a coil assembly in a generator that minimize the repair effort of the coil assembly that was already set in operation. Further, in particular, an object of the invention is to provide a tube for fastening a form coil on an electric machine, such as a generator, a coil assembly for a generator, a generator, a wind turbine, a method for repairing a generator, and a use of a tube as well as a use of a coil assembly in a generator facilitating the repair of the coil assembly that was already set in operation.

According to a first aspect, the object is achieved by a tube according to claim 1. The tube is a tube for fastening a form coil on an electric machine, such as a generator. In particular, the generator is a generator of a wind turbine. Preferred embodiments form the subject matter of the dependent claims.

The tube according to this aspect is provided and intended for fastening a form coil on an electric machine, such as a generator, in particular a generator of a wind turbine.

The tube has an elongated body extending between a first end and a second end opposing the first end with a body length. Further, the elongated body of the tube comprises a body height and a body width. In a mounted position of the tube in a coil assembly, the elongated body extends along an axial direction, parallel to an axis of rotation of the generator, with the body length. Further, in the mounted position of the tube in the coil assembly, the elongated body extends along a radial direction, orthogonal to an axis of rotation of the generator, with the body height. Finally, in the mounted position of the tube in the coil assembly, the elongated body extends in relation to the axis of rotation along a circumferential direction of the generator, with the body width.

According to this aspect, the body length of the elongated body is in a range of at least 200 mm and at maximum 3000 mm. Preferably, the body length of the elongated body is in the range of at least 400 mm and at maximum 2000 mm. Further, preferably, the body length of the elongated body is in the range of at least 500 mm and at maximum 1500 mm. In particular, the body length of the elongated body is in the range of at least 700 mm and at maximum 1000. Preferably, the body length of the elongated body is in the range of 800 mm ± 50 mm. Preferably, the body length of the elongated body corresponds to the axial length of the coil assembly. It may be preferred, that the body length of the elongated body is in a range of at least 50%, 60%, 70%, 80%, 90%, 100%, 110%, 120%, 130%, 140%, 150% or 200% of the axial length of the coil assembly and/or maximum 50%, 60%, 70%, 80%, 90%, 100%, 110%, 120%, 130%, 140%, 150% or 200% of the axial length of the coil assembly.

The tube has the body height of at least 10 mm and at maximum 500 mm. Preferably, the tube has the body height of at least 50 mm and at maximum 250 mm. In particular, the tube has the body height of at least 75 mm and at maximum 125 mm. Preferably, the body height of the elongated body is in the range of 100 mm ± 50 mm.

Further, preferably, the elongated body is configured for expanding radially at least with more than 0 % in the cross-section area and/or by a maximum of 5000 % in the cross-section area. Preferably, the body cross-section area of the elongated body is configured for expanding radially at least with more than 0 % in the cross-section area and/or by a maximum of 2000 %. In particular, when the tube is inserted in a groove between two legs of an electrical conductor and filled with the filling medium, the shape of the filled tube, in particular the cross-section of the filled tube corresponds to the groove, in particular the cross-section of the tube.

The body width of the elongated body is of at least 0,5 mm and at maximum 20 mm. In particular, the body width of the elongated body is of at least 1 mm and at maximum 10 mm. Preferably, the tube can be folded in such a manner that the width of the tube does not extend 1 mm, 2,5 mm, 5 mm or 10 mm or 20 mm.

Preferably, the tube has a cross-section, wherein the cross-section may in principle assume any possible cross-section geometry. Preferably, the tube may have a circular cross-section. In particular, the cross-section of the tube may be an oval cross-section or a polygonal cross-section. Further, preferably, the cross-section of the tube may match the geometry of a space between a first leg of one form coil and a second leg of another form coil that inserted in a groove of a laminated core.

The elongated body is hollow and comprises a chamber and at least one opening connecting the chamber with an environment surrounding the elongated body.

According to this first aspect, the at least one opening is configured for filling the elongated body with a filling medium.

The filling medium may be gaseous or liquid. The liquid can be curing. Preferably, the filling medium is a resin. For example, a gaseous filling medium may be air.

The tube allows to conduct a repair process of a generator on site, while the generator is maintained in the operation position mounted on the tower. Thus, expensive and time consuming dismantling and transportation, reassembly, installation and commissioning is obsolete. In particular, cranes, hoists or other lifting devices to bring the generator to be repaired down from the top of the wind turbine or lift the repaired generator back on top of the wind turbine are not necessary. Thus, downtime of the wind turbine is reduced when using tubes for fastening a form coil to a generator mounted in an operation position.

According to an example embodiment, the tube comprises a filling port configured to be connected to a resin press unit to fill the tube with the filling medium.

It may be preferred that a filling port is arranged at the first end or in the area of the first end. Alternatively, it may be preferred that a filling port is arranged at the second end or in the area of the second end. Alternatively, it may be preferred that a filling port is arranged in the middle between the first end and the second end or in the area of the middle between the first end and the second end. An arrangement of the filling port in the middle between the first end and the second end allow an even distribution of the filling medium from the middle to the respective ends. An arrangement of the filling port at one of the ends allows an easily accessible axial filling of the tube.

Preferably, the tube comprises two, three or more filling ports. In this case, it may be preferred that the filling ports are arranged evenly distributed between the first end and the second end of the elongated member. Preferably, the filling ports are arranged on the same side of the elongated member. A tube having more than one filling port has the advantage that the tube may be filled quicker and may allow a more evenly distributed filling of the filling medium inside of the tube.

Preferably, the resin press unit is any unit that is capable of exerting a pressure on the filling medium to eject the filling medium out of an exit in a controlled manner. The resin press may be, but is not limited to, a manual press unit, a hydraulic press unit and/or a pneumatic press unit. The use of a resin press allows for the controlled filling of filling medium into the tube as well as the ability to increase the pressure within the tube. Preferably, the resin press may be actuated manually and/or hydraulically and/or pneumatically and/or electrically.

It may be preferred that the resin press unit is configured to be coupled to one, two, three or more filling ports.

In some preferred example embodiments, the filling port comprises or is a valve. The valve may represent any device that regulates, directs or controls the flow of a fluid, in particular the flow of the filling medium, by opening, and/or closing, and/or partially obstructing the filling port. For example, the tube may have a valve that is open as the filling medium is being filled and closed after the filling is completed. Preferably, the filling rate may be regulated by adjusting the valve.

In some preferred example embodiments, the tube has a vent port through which air can escape when the tube is filled with the filling medium. Preferably, the vent port is arranged at the first end or in the area of the first end. Alternatively, it may be preferred that the vent port is arranged at the second end or in the area of the second end. Alternatively, it may be preferred that the vent port is arranged in the middle between the first end and the second end or in the area of the middle between the first end and the second end. An arrangement of the vent port in the middle between the first end and the second end allows a uniform discharge of air, which is being displaced from the filling medium that may be filled into the tube via the filling port. An arrangement of the vent port at one of the ends allows an easy discharge of the air, which is being displaced from the filling medium that may be filled into the tube via the filling port.

Preferably, the tube comprises two, three or more vent ports. In this case, it may be preferred that the vent ports are arranged evenly distributed between the first end and the second end of the elongated member. Preferably, the vent ports are arranged on the same side of the elongated member. A tube having more than one vent port has the advantage that the tube may be discharged quicker and may allow a more evenly distributed discharging of the air, which is being displaced from the filling medium that may be filled into the tube via the filling port.

Preferably, the vent port or the vent ports are arranged opposite to the filling port or filling ports. In particular, the vent port or the vent ports and the filling port or filling ports are arranged at opposite ends or opposite sides of the tube. In particular, a filling port or filling ports may be arranged at the first end of the elongated member and a vent port or vent ports may be arranged at the second end of the elongated member.

The vent port allows for the air present within the tube to escape when the tube is filled with the filling medium, reducing pressure and allowing for easier filling of the filling medium. The vent port may be an opening, and/or hole, and/or device and can have any possible geometry. The vent port may, in some example embodiments, be a one way vent port which only allows air to escape from the tube but prevents it from entering the tube. The vent port may also be configured in such a way that only air is allowed to escape and not allowing an out flow of the filling medium.

According to a further aspect of the disclosure, the object is achieved by coil assembly according to claim 5. The coil assembly is a coil assembly for a generator. In particular, the generator is a generator for a wind turbine. Preferred embodiments form the subject matter of the dependent claims.

The coil assembly comprises several form coils, a laminated core, and a tube.

Each of the several form coils is formed by an electrical conductor extending between a first terminal and a second terminal, a respective first terminal of a form coil being connected to a second terminal of a further form coil. Preferably, the form coil is formed by an electrical conductor extending between a first terminal and a second terminal. The electrical conductor forms two parallel legs extending between first and second coil heads by which the two legs are interconnected. It is to be understood that the two parallel legs are a first leg and a second leg of the electrical conductor.

The laminated core has a plurality of grooves extending in the axial direction parallel to the axis of rotation of the generator and parallel to one another between a first groove end and a second groove end. The grooves are arranged at a distance from one another in the circumferential direction with respect to the axis of rotation. Preferably, the laminated core is a laminated core for a rotor or a laminated core for a stator. Preferably, the grooves have a trapezoidal cross-section. In particular, the width of the groove decreases in the direction of the groove base of the groove.

The first leg of one form coil and the second leg of another form coil are respectively inserted in the grooves. A tube is arranged in at least one of the grooves between the first leg and the second leg. Preferably, the tube is a tube according to the first aspect or an example embodiment as described above.

The tube can be arranged in the grooves without the need of removing the coil assembly from the generator, and/or the generator from where it is located. The filling of the tube with the filling medium may cause the tube to expand in the radial and/or circumferential direction. The expansion of the tube may wedge the respective form coils against the laminated core securing it in place.

As to the advantages, preferred example embodiments and details of the coil assembly, reference is made to the corresponding further aspects and example embodiments described herein above and/or below.

In some example embodiments, the filling medium comprises or is a resin. Preferably, the resin is a cured and/or a self-curing resin. In some example embodiments, the resin is a 1-component resin. In particular, the resin is a 2-component resin, wherein preferably the resin is cured and/or a self-curing resin. The two component resin may comprise a resin and a hardener which are mixed in a specific ratio, for example 2:1 or 4:1. The mixing of the components may create a chemical reaction that cures the resin into a hard and durable material after a period of time. The curing process may also be carried out via other means, for example heat, for a heat reactive filling medium. The curing process allows the tube to maintain its shape, without the risk of leakage of a non-solid filling medium, and secure the form coil against laminated core.

According to a further aspect of the disclosure, the object is achieved by a generator according to claim 7. The generator is a generator for a wind turbine. The generator comprises a coil assembly according to the aspect and/or respective example embodiments thereof described above.

As to the advantages, preferred example embodiments and details of the generator, reference is made to the corresponding further aspects and embodiments described herein above and/or below.

According to a further aspect of the disclosure, the object is achieved by a wind turbine according to claim 8. The wind turbine comprises a coil assembly according to the aspect and/or respective embodiments thereof described above. Additionally or alternatively, the wind turbine comprises a generator according to the aspect and/or respective embodiments thereof described above.

As to the advantages, preferred embodiments and details of the wind turbine, reference is made to the corresponding further aspects and embodiments described herein above and/or below.

According to yet another aspect of the disclosure, according to claim 9, the object is achieved by use of a tube according to the first aspect and/or respective example embodiments thereof described herein above in a generator, in particular in a generator for a wind turbine, and/or in a wind turbine.

As to the advantages, preferred embodiments and details of this aspect, reference is made to the corresponding further aspects and embodiments described herein above and/or below.

Further, according to another aspect of the disclosure, according to claim 10, the object is achieved by use of a coil assembly according to the second aspect and/or respective example embodiments as described herein above in a generator, in particular in a generator for a wind turbine, and/or in a wind turbine.

As to the advantages, preferred embodiments and details of this aspect, reference is made to the corresponding further aspects and embodiments described herein above and/or below.

According to a further aspect of the present invention, the object stated at the outset is achieved by a method according to claim 11. This aspect relates to a method for repairing a generator with form coils, in particular a generator of a wind turbine with form coils.

The generator to be repaired comprises a coil assembly having several form coils and a laminated core. Preferably, the generator is a generator according to one aspect as described herein above.

The several form coils are each formed by an electrical conductor extending between a first terminal and a second terminal, a respective first terminal of a form coil being connected to a second terminal of a further form coil, wherein the electrical conductor forms two parallel legs extending between first and second coil heads by which the two legs are interconnected. The laminated core, in particular a laminated core for a rotor or a laminated core for a stator, has a plurality of grooves extending in the axial direction parallel to the axis of rotation of the generator and parallel to one another between a first groove end and a second groove end, which grooves are arranged at a distance from one another in the circumferential direction with respect to the axis of rotation.

The two legs of the form coils are each inserted in one of the grooves which are closed by a groove locking wedge in the direction of an air gap existing between the stator and the rotor in the operating state, the groove locking wedge pressing the first leg of the one form coil against a first side wall of the groove and pressing the second leg of the further form coil against a second side wall of the groove. A groove locking wedge is also named or known as slot wedge.

The method for repairing a generator with form coils comprises several steps. The method comprises the step of determining a defective form coil from the plurality of form coils. As the defective form coil can cause the generator to lose generating potential or stop the generator from fully functioning, such a defective form coil may be removed and replaced by a new form coil. The defective form coil may be determined by using a multimeter, and/or ohmmeter to test the resistance of each coil, this testing can be carried out onsite without the need to transport the form coils or the generator to which it belongs offsite. After the defective coil has be determined, the method comprises the step of decoupling the first and second terminals of the determined defective form coil from two more of the plurality of form coils. Further, the method comprises the step of separating the first and second coil heads of the determined defective form coil. Further, the method comprises the step of cutting open and removing a groove locking wedge and a fastening wedge in the groove in which the first leg of the defective form coil is located. Subsequently, the method comprises the steps of removing the first leg of the defective form coil from the groove and inserting a first leg of a new form coil with an electrical conductor. Finally, the method comprises the steps of inserting a tube fillable with a filling medium into the groove, into which the first leg of the new form coil has been inserted, between the first leg of the newly inserted form coil and the second leg of the further form coil already inserted in the groove, and filling of the tube inserted in the groove with the filling medium until the first leg of the new form coil and the second leg of the further form coil still inserted in the groove are pressed against the respective first and second side walls of the groove and/or contact them.

As to the advantages, preferred embodiments and details of the method, reference is made to the corresponding further aspects and embodiments described herein above and/or below.

According to a first preferred embodiment, the method comprises the steps of cutting open and removing a groove locking wedge and a fastening wedge in the groove in which the second leg of the defective form coil is located. Further, the method comprises the steps of removing a second leg of the defective form coil from the groove and inserting a second leg of the new form coil with the electrical conductor. Further, the method comprises the steps of inserting of a tube fillable with a filling medium into the groove, into which the second leg of the new form coil has been inserted, between the second leg of the newly inserted form coil and the first leg of the further form coil already inserted in the groove, and filling the tube inserted in the groove with the filling medium until the second leg of the new form coil and the first leg of the further form coil still inserted in the groove are pressed against the respective first and second side walls of the groove and/or contact them.

In another preferred embodiment, the method comprises the step of curing the filling medium filled into the tube.

In yet another preferred embodiment, the method comprises the step of cleaning the groove from which the first and/or second leg of the defective form coil was removed.

According to a further preferred embodiment of the method, the step of filling the tube inserted in the groove with the filling medium comprises the following substeps: providing a resin press unit, placing the resin press unit on a filling port of the tube to be filled, and actuating the attached resin press unit to introduce resin into the tube to be filled.

The tube, the coil assembly, the generator, the wind turbine, the method according to the invention, as well as their possible further developments, have features or method steps that make them suitable, in particular, for use in repairing generators, in particular generators of wind turbines. For further advantages, embodiment variants and embodiment details of these aspects and their possible further embodiments, reference is also made to the previously given description relating to the corresponding features and further embodiments of the tube for fastening the form coil on a generator, the coil assembly, the generator, the wind turbine, and the method.

Preferred embodiments of the invention are explained by way of example with reference to the accompanying figures. There are shown:
- Figure 1:: a schematic three-dimensional view of an exemplary embodiment of a power installation;
- Figure 2a:: a schematic drawing of the side view of a laminated core with both defective form coils and intact form coils;
- Figure 2b:: a schematic drawing of top view a laminated core with both defective form coils and intact form coils showing the groove locking wedges;
- Figure 3a:: a schematic drawing of the side view of a laminated core with intact form coils and the defective form coils removed;
- Figure 3b:: a schematic drawing of top view a laminated core with intact form coils and the defective form coils removed;
- Figure 4a:: a schematic drawing of the side view of a laminated core with intact form coils and new form coils inserted;
- Figure 4b:: a schematic drawing of top view a laminated core with intact form coils and new form coils inserted;
- Figure 5:: a schematic block diagram of a repair method of a generator;
- Figure 6:: a schematic block diagram of a preferred embodiment of a repair method of a generator.

In the figures, identical or essentially functionally identical or similar elements are referred to with the same reference signs.

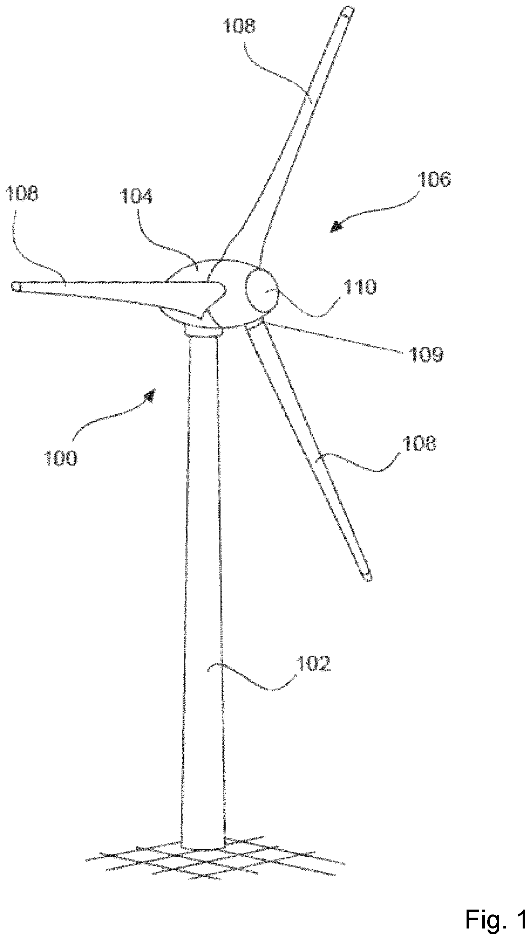

Fig. 1 shows a schematic, three-dimensional view of a wind turbine according to the invention. The wind turbine 100 has a tower 102 and a nacelle 104 on the tower 102. An aerodynamic rotor 106 with three rotor blades 108 and a spinner 110 is provided on the nacelle 104. During operation of the wind turbine, the aerodynamic rotor 106 is set in rotation by the wind and thus also rotates an electrodynamic rotor or rotor of a generator, which is coupled directly or indirectly to the aerodynamic rotor 106. The electrical generator is arranged in the nacelle 104 and generates electrical energy. The pitch angles of the rotor blades 108 can be changed by pitch motors on the rotor blade roots 108b of the respective rotor blades 108.

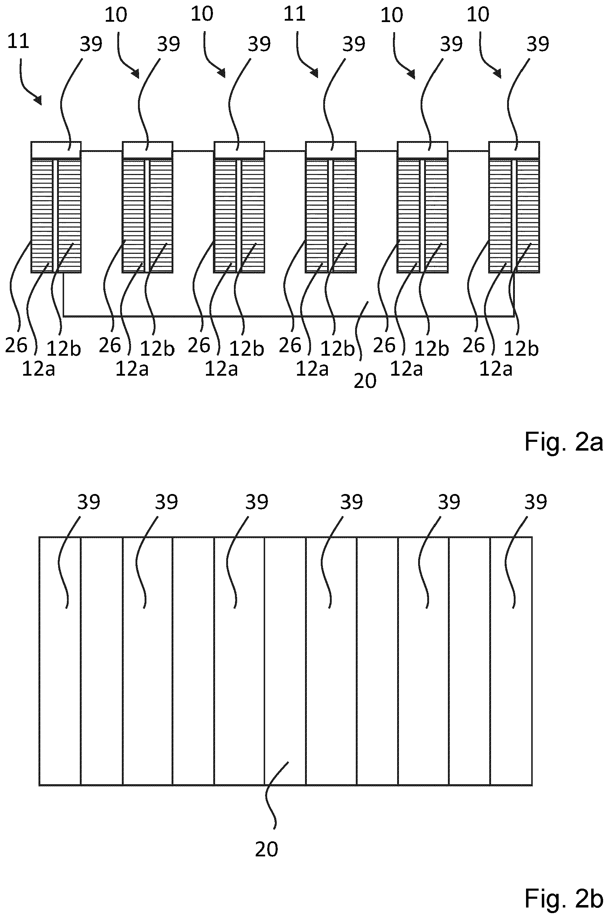

In Figure 2a shows a schematic drawing of the side view of a laminated core 20 with both defective form coils 11 and intact form coils 10. The laminated core 20 has a plurality of grooves extending in the axial direction parallel to the axis of rotation of the generator and parallel to one another between a first groove end and a second groove end, which grooves are arranged at a distance from one another in the circumferential direction with respect to the axis of rotation. The form coils 10, 11 are situated within the grooves by first connecting the first leg 12a of one form coil 10, 11 and a second leg 12b of another form coil 10, 11. The form coil 10, 11 is formed by an electrical conductor 26 extending between a first terminal and a second terminal. The form coil 10, 11 is connected to other form coils 10, 11 by connecting the first terminal of the form coil 10, 11 to a second terminal of a further form coil 10, 11. The electrical conductor 26 forms two parallel legs extending between first and second coil heads by which the two legs 12a, 12b are interconnected. The form coils 10, 11 are secured in place in the groove with the use of a groove locking wedge 39.

Figure 2b shows the top view of the side view of the laminated core 20 with the groove locking wedge 39 securing the form coils 10, 11 in place.

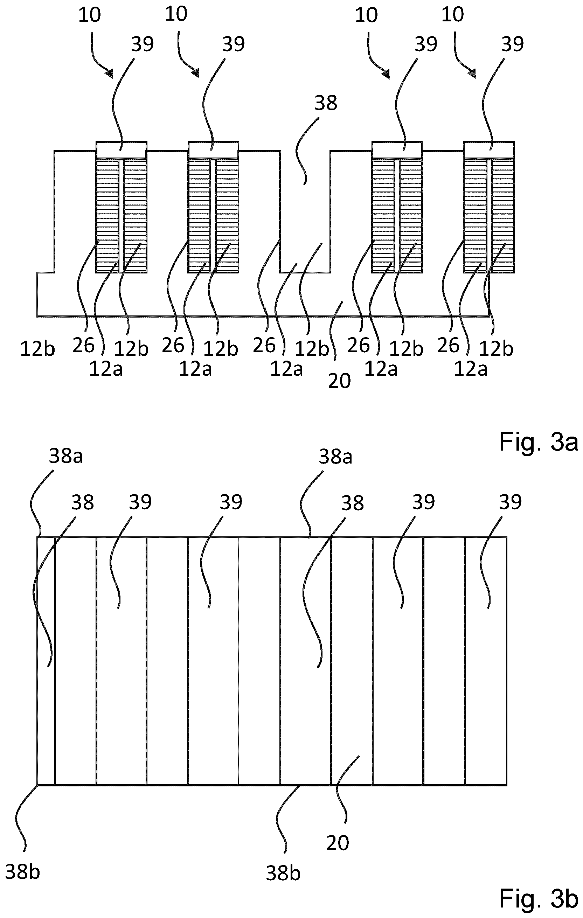

Figure 3a is a schematic drawing of the side view of a laminated core 20 with intact form coils 10 and the defective form coils removed.

With the removal of the defective form coils 11 indicated in Figure 2, empty grooves 38 are now present along the laminated core 20 where the defective form coils 11 previously sat. A variety of methods can be used to remove the defective form coil 11. For example, decoupling the first and second terminals of the defective form coil 11 from two more of the plurality of form coils 10, separating the first and second coil heads of the defective form coil 11, cutting open and removing the groove locking wedge 39 and a fastening wedge 40 in the groove in which the first leg 12a of the defective form coil 11 is located, removing the two legs 12a, 12b of the defective form coil 11 from the groove 38 and removing the defective form coil. The intact form coil 10 is formed by an electrical conductor 26 extending between a first terminal and a second terminal with the first leg 12a of one intact form coil 10 and a second leg 12b of another intact form coil 10 connected. The legs 12a, 12b are disconnected from the empty filling groove 38. The intact form coils 10 are secured in place by a groove locking wedge 39.

Figure 3b shows the top view of the side view of a laminated core 20 with the groove locking wedge 39 securing the intact form coils 10 in place and the empty filling grove 38 present due to the removal of the defective form coil 11. Present along the empty filling groove is the first groove end 38a and on the opposite end a second groove end 38b.

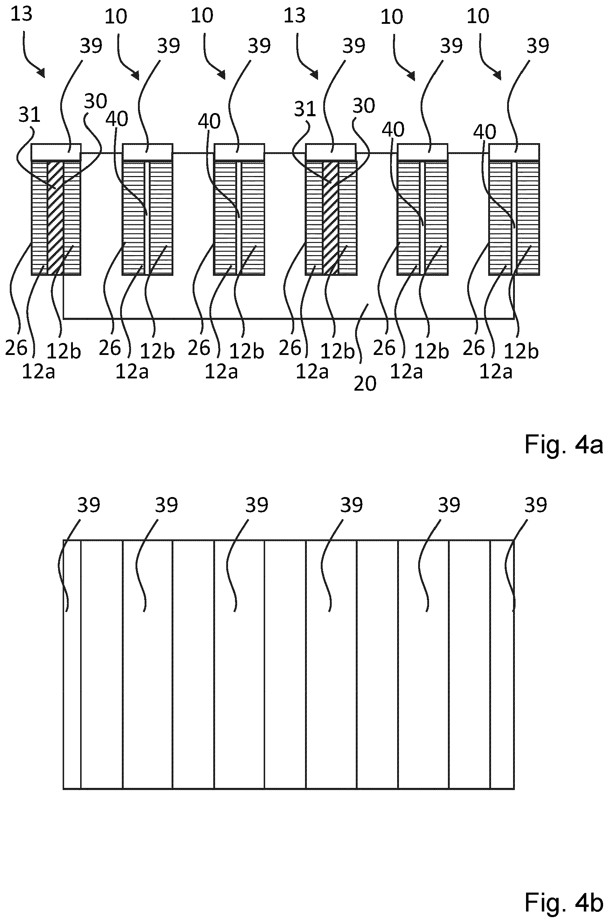

Figure 4a shows a schematic drawing of the side view of a laminated core 20 with intact form coils 10 and new form coils 13 inserted.

The new form coils 13 are pressed against the respective first and second side walls of the groove with the use of a tube 30 filled with a filling medium 31. The filling medium may be in a gaseous and/or liquid and/or solid state dependent on the filling medium used and/or if curing of the filling medium was carried out. The new form coils may be additionally secured in place to the laminated core 20 with the use of a groove locking wedge 39.

Figure 4b is a schematic drawing of the side view of the laminated core 20 with intact form coils 10 and new form coils 13 inserted. The previous empty groove 38 disclosed in Figure 3b is filled with the new form coil and secured in place to the laminated core 20 with the use of a groove locking wedge 39.

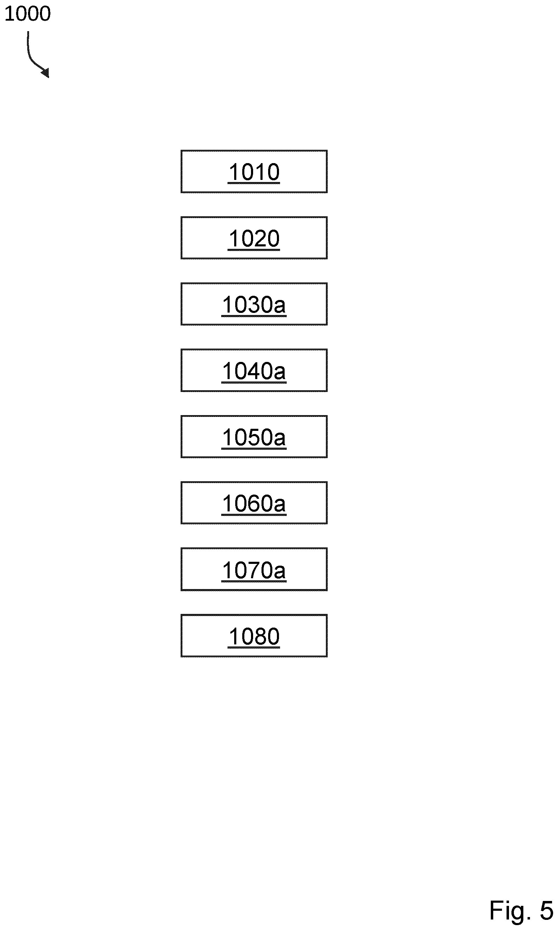

Figure 5 shows a schematic block diagram of a method 1000 for repairing a generator comprising a coil assembly such as described above with respect to Figure 2a-4b. The method according to this preferred embodiment comprises eight steps, 1010, 1020, 1030a, 1040a, 1050a, 1060a, 1070a, 1080.

The first step of the method 1000 relates to decoupling 1010 the first and second terminals of the defective form coil 11 from two more of the plurality of form coils 10. The defective form coil 11 can be determined, for example, by using a multimeter, and/or ohmmeter to test the resistance of each coil. A defective coil 11 is a coil that is no longer performing up to manufacturer specifications.

Subsequently, the method comprises the steps of separating 1020 the first and second coil heads of the defective form coil 11 and cutting open and removing 1030a a groove locking wedge 39 and a fastening wedge in the groove in which the first leg 12a of the defective form coil 11 is located.

Next, the method comprises the steps of removing 1040a the first leg 12a of the defective form coil 11 from the groove 38, and inserting 1050a a first leg 12a of a new form coil 13 with an electrical conductor.

Further, the method 1000 comprises the step of inserting 1060a a tube 30 fillable with a filling medium 31 into the groove 38, into which the first leg 12a of the new form coil 13 has been inserted, between the first leg 12a of the newly inserted form coil 13 and the second leg 12b of the further form coil 10 already inserted in the groove. It is understood that the tube 30 may be unfilled with filling medium 31 and/or partially filled with filling medium 31 and/or fully filled with filling medium 31 before insertion.

Finally, the method 1000 comprises the steps of filling 1070a of the tube 30 inserted in the groove 38 with the filling medium 31 until the first leg 12a of the new form coil and the second leg 12b of the further form coil still inserted in the groove are pressed against the respective first and second side walls of the groove 38 and/or contact them and curing 1080a of the filling medium 31 filled into the tube 30. The filling of the filling medium 31 may be achieved by using a resin press unit, placing the resin press unit on a filling port of the tube 30 to be filled and actuating the attached resin press unit to introduce resin into the tube 30 to be filled. It is understood that curing 1080 of the filling medium 31 may be achieved via a variety of methods, for example, a chemical reaction and/or application of heat.

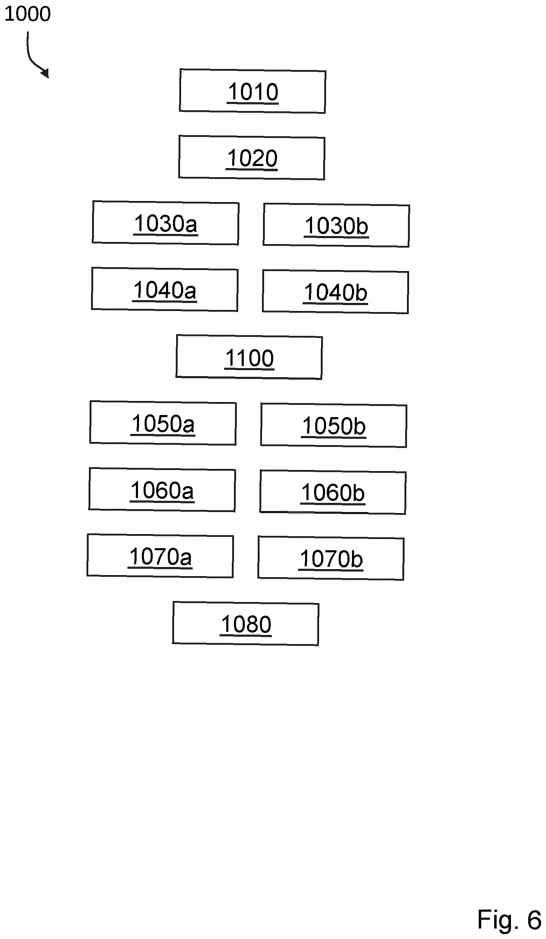

Figure 6 is a schematic block diagram 1000 of a further preferred embodiment of a method for repairing a generator comprising a coil assembly such as described above with respect to Figure 2a-4b. Figure 6 is based on the method described with respect to Figure 5. The embodiment referred to in Figure 6 comprises two additional steps 1100 in comparison to the embodiment described herein above with respect to Figure 5. In addition, alternative steps to 1030a, 1040a, 1050a, 1060a, and 1070a are presented with 1030b, 1040b, 1050b, 1060b, and 1070b respectively. Preferably, none or any combination of the alternative steps, 1030b, 1040b, 1050b, 1060b, and 1070b may be used to replace the steps of 1030a, 1040a, 1050a, 1060a, and 1070a respectively.

After the steps of decoupling 1010 and separating 1020, the method according to this preferred embodiment comprises the step of cutting open and removing 1030a a groove locking wedge 39 and a fastening wedge in the groove in which the first leg 12a of the defective form coil 11 is located. Additionally, the method 1000 comprises a step of cutting open and removing 1030b a groove locking wedge 39 and a fastening wedge in the groove in which the second leg 12b of the defective form coil 11 is located.

Subsequently, in addition to the step of removing 1040a the first leg 12a of the defective form coil 11 from the groove 38, the method 1000 comprises the step of removing 1040b the second leg 12b of the defective form coil 11 from the groove 38. After the removal of the first and/or the second leg 12b of the defective form coil, cleaning 1100 of the groove 38 from which the first and/or second leg 12b of the defective form coil was removed is performed.

Further, the method 1000 comprises the step of inserting 1050a a first leg 12a of a new form coil 13 with an electrical conductor, and, additionally, the method 1000 comprises the step of inserting 1050b a second leg 12b of a new form coil 13 with the electrical conductor 26.

Next, the method 1000 comprises the step of inserting 1060a a tube 30 fillable with a filling medium 31 into the groove 38, into which the first leg 12a of the new form coil 13 has been inserted, between the first leg 12a of the newly inserted form coil 13 and the second leg 12b of the further form coil 10 already inserted in the groove. Additionally, the method 1000 comprises the step of inserting 1060b a tube 30 fillable with a filling medium 31 into the groove 38, into which the second leg 12b of the new form coil 13 has been inserted, between the second leg 12b of the newly inserted form coil 13 and the first leg 12a of the further form coil 10 already inserted in the groove. It is understood that the tube 30 may be unfilled with filling medium 31 and/or partially filled with filling medium 31 and/or fully filled with filling medium 31 before insertion.

Subsequently, the method 1000 relates to the step of filling 1070a of the tube 30 inserted in the groove with the filling medium 31 until the first leg 12a of the new form coil and the second leg 12b of the further form coil still inserted in the groove are pressed against the respective first and second side walls of the groove 38 and/or contact them. Additionally, the method 1000 comprises the step of filling 1070b the tube 30 inserted in the groove with the filling medium 31 until the second leg 12b of the new form coil and the first leg 12a of the further form coil still inserted in the groove are pressed against the respective first and second side walls of the groove 38 and/or contact them. The filling of the filling medium 31 may be achieved by using a resin press unit, placing the resin press unit on a filling port of the tube 30 to be filled and actuating the attached resin press unit to introduce resin into the tube 30 to be filled.

Finally, the method 1000 comprises the step of and curing 1080 of the filling medium 31 filled into the tubes 30. It is understood that curing 1080 of the filling medium 31 may be achieved via a variety of methods, for example, a chemical reaction and/or application of heat.

### List of reference signs

- 10: form coil
- 11: defective form coil
- 12a: first leg
- 12b: second leg
- 13: new form coil
- 20: laminated core
- 26: electrical conductor
- 30: tube
- 31: filling medium
- 38: groove
- 38a: first groove end
- 38b: second groove end
- 39: groove locking wedge
- 40: fastening wedge
- 100: power installation
- 102: tower
- 104: nacelle
- 106: wind turbine
- 108: turbine blades
- 109: pitch bearings
- 110: rotor hub
- D: axis of rotation
- U: circumferential direction

## Claims

1. A tube (30) for fastening a form coil (10) on an electric machine, such as a generator, in particular on a generator of a wind turbine (100), the tube (30) comprising:
- an elongated body extending between a first end and a second end opposing the first end with a body length and the elongated body further comprising, a body height, and a body width, wherein
- the elongated body is hollow and comprises a chamber and at least one opening connecting the chamber with an environment surrounding the elongated body, wherein
- the at least one opening is configured for filling the elongated body with a filling medium (31), wherein
- the body length of the elongated body is in a range of at least 200 mm and at maximum 3000 mm, and the body height of the elongated body is in the range of at least 10 mm and at maximum 500 mm, and the body width is of at least 0,5 mm and at maximum 20 mm.

2. The tube (30) according to preceding claim 1, wherein the tube (30) comprises a filling port configured to be connected to a resin press unit to fill the tube (30) with the filling medium (31).

3. The tube (30) according to the preceding claim 2, wherein the filling port comprises or is a valve.

4. The tube (30) according to any of the preceding claims 1 to 3, wherein the tube (30) has a vent port through which air can escape when the tube (30) is filled with the filling medium (31).

5. A coil assembly for a generator, in particular a generator for a wind turbine (100), the coil assembly comprising:
- several form coils (10),
∘ each formed by an electrical conductor (26) extending between a first terminal and a second terminal, a respective first terminal of a form coil being connected to a second terminal of a further form coil (10), wherein
∘ the electrical conductor forms two parallel legs (12a, 12b) extending between first and second coil heads by which the two legs (12a, 12b) are interconnected; and
- a laminated core (20), in particular a laminated core for a rotor or a laminated core for a stator, which has a plurality of grooves (38) extending in the axial direction (A) parallel to the axis of rotation (D) of the generator and parallel to one another between a first groove end (38a) and a second groove end (38b), which grooves are arranged at a distance from one another in the circumferential direction (U) with respect to the axis of rotation (D); wherein
- the first leg (12a) of one form coil (10) and the second leg (12b) of another form coil (10) are respectively inserted in the grooves (38); wherein
- a tube (30) is arranged in at least one of the grooves (38) between the first leg (12a) and the second leg (12b), wherein
- the tube (30) is filled with a filling medium (31), wherein preferably, the tube (30) is a tube according to any one of the preceding claims 1 to 4.

6. A coil assembly according to the preceding claim, wherein the filling medium (31) comprises or is a resin, in particular a 2-component resin, wherein preferably the resin is cured and/or self-curing.

7. A generator, in particular a generator for a wind turbine, the generator comprising a coil assembly according to any one of the preceding claims 5 to 6.

8. A wind turbine comprising a coil assembly according to any one of the preceding claims 5 to 6 and/or a generator according to the preceding claim 7.

9. Use of a tube according to any one of the preceding claims 1-4 in a generator, in particular in a generator for a wind turbine, and/or in a wind turbine.

10. Use of a coil assembly according to any one of the preceding claims 5-6 in a generator, in particular in a generator for a wind turbine, and/or in a wind turbine.

11. Method (1000) for repairing a generator (130) with form coils (10), in particular a generator (130) of a wind turbine (100) with form coils (10), the generator (130) to be repaired comprising a coil assembly having:
- several form coils (10),
∘ each formed by an electrical conductor (26) extending between a first terminal and a second terminal, a respective first terminal of a form coil being connected to a second terminal of a further form coil (10), wherein
∘ the electrical conductor forms two parallel legs (12a, 12b) extending between first and second coil heads by which the two legs (12a, 12b) are interconnected; and
- a laminated core (20), in particular a laminated core for a rotor or a laminated core for a stator, which has a plurality of grooves (38) extending in the axial direction (A) parallel to the axis of rotation (D) of the generator and parallel to one another between a first groove end (38a) and a second groove end (38b), which grooves are arranged at a distance from one another in the circumferential direction (U) with respect to the axis of rotation (D); wherein
- the two legs (12a, 12b) of the form coils (10) are each inserted in one of the grooves (38) which are closed by a groove locking wedge (39) in the direction of an air gap existing between the stator and the rotor in the operating state, the groove locking wedge (39) pressing the first leg (12a) of the one form coil (10) against a first side wall of the groove (38) and pressing the second leg (12b) of the further form coil (10) against a second side wall of the groove (38);
the method (1000) comprising the steps:
- Determining a defective form coil (11) from the plurality of form coils (10);
- Decoupling (1010) the first and second terminals of the determined defective form coil (11) from two more of the plurality of form coils (10);
- Separating (1020) the first and second coil heads of the determined defective form coil (11);
- Cutting open and removing (1030a) a groove locking wedge (39) and a fastening wedge in the groove in which the first leg (12a) of the defective form coil (11) is located;
- Removing (1040a) the first leg (12a) of the defective form coil (11) from the groove (38);
- Inserting (1050a) a first leg (12a) of a new form coil (13) with an electrical conductor;
- Inserting (1060a) a tube (30) fillable with a filling medium (31) into the groove (38), into which the first leg (12a) of the new form coil (13) has been inserted, between the first leg (12a) of the newly inserted form coil (13) and the second leg (12b) of the further form coil (10) already inserted in the groove; and
- Filling (1070a) of the tube (30) inserted in the groove with the filling medium (31) until the first leg (12a) of the new form coil and the second leg (12b) of the further form coil still inserted in the groove are pressed against the respective first and second side walls of the groove and/or contact them.

12. A method (1000) according to the preceding claim 11, comprising the steps of:
- Cutting open and removing (1030b) a groove locking wedge (39) and a fastening wedge in the groove in which the second leg (12b) of the defective form coil (11) is located;
- Removing (1040b) a second leg (12b) of the defective form coil (11) from the groove (38);
- Inserting (1050b) a second leg (12b) of the new form coil (13) with the electrical conductor (26):
- Inserting (1060b) of a tube (30) fillable with a filling medium (31) into the groove (38), into which the second leg (12b) of the new form coil (13) has been inserted, between the second leg (12b) of the newly inserted form coil (13) and the first leg (12a) of the further form coil (10) already inserted in the groove;
- Filling (1070b) the tube (30) inserted in the groove with the filling medium (31) until the second leg (12b) of the new form coil and the first leg (12a) of the further form coil still inserted in the groove are pressed against the respective first and second side walls of the groove and/or contact them.

13. A method (1000) according to any one of the preceding claims 11 or 12, comprising the step of:
- Curing (1080) of the filling medium (31) filled into the tube (30).

14. A method (1000) according to any one of the preceding claims 11 to 13, comprising the step of:
- Cleaning (1100) the groove from which the first and/or second leg of the defective form coil was removed.

15. The method according to any one of the preceding claims 11 to 14, wherein the step of filling the tube (30) inserted in the groove with the filling medium (31), comprises the following substeps:
- Providing a resin press unit;
- Placing the resin press unit on a filling port of the tube (30) to be filled; and
- Actuating the attached resin press unit to introduce resin into the tube (30) to be filled.
